# EUROPÄISCHE PATENTSCHRIFT

(11) **EP 2 318 268 B1**
(45) Veröffentlichungstag und Bekanntmachung des Hinweises auf die Patenterteilung: **19.09.2012**
(21) Anmeldenummer: 09777157.0
(22) Anmeldetag: 13.07.2009
(51) Int. Cl.: B63H 9/06, B63H 9/08

(54) **SEGELEINRICHTUNG, INSBESONDERE FÜR HOCHSEEGÄNGIGE FRACHTSCHIFFE, YACHTEN ODER DERGLEICHEN**
SAILING DEVICE, ESPECIALLY FOR DEEP-SEA CARGO SHIPS, YACHTS, OR THE LIKE
DISPOSITIF DE NAVIGATION À LA VOILE, EN PARTICULIER POUR DES NAVIRES MARCHANDS, YACHTS OU ANALOGUE ÉVOLUANT EN HAUTE MER

(30) Priorität: 28.07.2008 DE 102008035071
(43) Veröffentlichungstag der Anmeldung: 11.05.2011
(73) Patentinhaber: Burandt, Burghardt, 81679 München (DE)
(72) Erfinder: Burandt, Burghardt, 81679 München (DE)
(74) Vertreter: Zeitler - Volpert - Kandlbinder
(86) Internationale Anmeldenummer: PCT/EP2009/005082
(87) Internationale Veröffentlichungsnummer: WO 2010/012373

(56) Entgegenhaltungen:
- EP-A2- 0 173 979
- WO-A1-84/02319
- DE-U1- 7 732 111
- GB-A- 742 128
- GB-A- 2 234 723

## Beschreibung

Die Erfindung bezieht sich auf eine Segeleinrichtung insbesondere für hochseegängige Frachtschiffe, Yachten oder dergleichen.

Aus den Medien, siehe beispielsweise den Artikel "Wie Tanker Kraftstoff sparen können" in der Zeitung Welt am Sonntag, Nr. 5 vom 3. Februar 2008, sind Appelle bekannt, Kreuzfahrt- und Containerschiffe mögen künftig weniger Schadstoffe als bisher ausstoßen und mit dazu beitragen, Energie in Form von fossilen Brennstoffen einzusparen. Einige Betreiber derartiger Schiffe greifen auf Windkraft als Zusatzantrieb zurück und setzen beispielsweise Lenkdrachen, Luftschiffe oder Segel ein, welche den Vortrieb des Schiffes unterstützen und damit zu einem verminderten Schadstoffausstoß sowie einer Energieeinsparung beitragen können. Ferner sind in dem Artikel "Betriebssimulation von Frachtschiffen mit Windzusatzantrieb" von Clauss et al., 102. Hauptversammlung der Schiffbautechnischen Gesellschaft, 21. bis 23. 11. 2007, Berlin, Seiten 1 bis 11 verschiedene Segeltypen beschrieben, welche einander gegenübergestellt werden. Hier findet auch ein sogenanntes BSP-Segel Erwähnung, welches aus modifizierten Klappenprofilen besteht, wie sie aus dem Flugzeugbau und dem Strömungsmaschinenbau bekannt sind. Die meisten dieser teilweise neu entwickelten Antriebe können nur schlecht oder gar nicht am Wind segeln und insofern nur unzureichend oder gar keine Höhe machen. Das bedeutet, dass sich die Betreiber derartiger Schiffe weitestgehend an die historischen, jahreszeitlichen Segelrouten halten und zum Teil erhebliche Umwege in Kauf nehmen müssen. Derartige Umwege machen die wirtschaftlichen und umwelttechnischen Vorteile der Zusatzantriebe oft wieder zunichte.

Das Dokument WO 84 /02319 zeigt eine gattungsgemäβe Segeleinrichtung mit den Merkmalen des Oberbegriffs des unabhangigen Anspruchs 1.

Aus dem Dokument DE 77 32 111 U1 ist eine Segeleinrichtung bekannt, bei welcher sechs hintereinander angeordnete Segelflächen über eine obere und eine untere, jeweils horizontal verlaufende Halterung mit einem Mast verbunden ist. Die Segelflächen sind jeweils um eine etwa vertikale Achse drehbar.

Aus der GB 2 234 723 A ist eine Segeleinrichtung bekannt, bei welcher ein U-förmiger und insofern torförmig ausgebildeter Mast eine obere und untere Halterung aufweist. Zwischen den Halterungen befinden sich drei Segelflächen, welche um etwa vertikale, an den Halterungen befestigte Drehachsen schwenkbar sind.

Aus der GB 742 128 A ist eine Segeleinrichtung bekannt, bei welcher die oberen, spitz zulaufenden Enden beider Segelflächen unmittelbar am Mast, die unteren, vorderen Enden der Segelflächen hingegen auf einer Halterung in Längsrichtung des Schiffes verstellbar geführt sind.

Der Erfindung liegt die Aufgabe zugrunde, eine Segeleinrichtung der eingangs erwähnten Art zu schaffen, welche ein Segeln hoch am Wind und ein effizientes Ausnutzen der Windenergie ermöglicht.

Diese Aufgabe wird erfindungsgemäß durch eine Segeleinrichtung mit den Merkmalen des Patentanspruchs 1 gelöst. Vorteilhafte Weiterbildungen sind Gegenstand der Unteransprüche.

Die erfindungsgemäße Segeleinrichtung hat wenigstens einen mit dem Schiff verbundenen Mast und zwei mit Hilfe des Mastes gehaltene Segelflächen, wobei der Mast zum Halten und Setzen der Segelflächen an seinem oberen, vom Schiff weg weisenden Ende eine obere Halterung und an seinem unteren, mit dem Schiff verbundenen Ende eine untere Halterung aufweist und Enden der Segelflächen in Längs- bzw. Querrichtung des Schiffes in den Halterungen verschiebbar geführt sind. Durch die Anordnung von Mast und Halterungen entsteht eine äußerst kompakte Segeleinrichtung, welche einen verhältnismäßig geringen Platzbedarf hat. Die erfindungsgemäße Segeleinrichtung in Form des Mastes mit oberer und unterer Halterung kann mehr Segelfläche tragen, als dies bei herkömmlichen Mast/Segelkonstruktionen der Fall ist. Erfindungsgemäß kann ein herkömmliches Dreieck-Vorsegel entfallen. Durchzuführende Segelmanöver sind durch die in Längs- bzw. Querrichtung des Schiffes verstellbare Führung von Enden der Segelflächen in den Halterungen sicher und unproblematisch zu bewerkstelligen. Beide Segelflächen können durch ihre Anordnung innerhalb der Segeleinrichtung durch einen sogenannten Düseneffekt zur Leistungssteigerung der gesamten Segeleinrichtung beitragen. Die erfindungsgemäße Segeleinrichtung ermöglicht sowohl eine große Höhe am Wind als auch ein optimales Vorwärtskommen bei raumem Wind.

Gemäß einer Weiterbildung der Erfindung sind die Halterungen jeweils kreuzförmig ausgebildet und weisen zum Führen der Enden der Segelflächen einen sich in Längsrichtung des Schiffes erstreckenden Träger sowie einen sich in Querrichtung des Schiffes erstreckenden Träger auf, wobei jeder Längsträger einen bugseitigen und einen heckseitigen Abschnitt und jeder Querträger einen backbordseitigen und einen steuerbordseitigen Abschnitt zum Aufnehmen jeweils eines Endes einer der Segelflächen aufweist. Derartige Halterungen und Träger sind auf gesicherter Basis auszulegen und damit zu dimensionieren und können aus hochfesten und gleichzeitig leichten Materialien gefertigt sein. Ein Navigieren mit der erfindungsgemäßen Segeleinrichtung ist unproblematisch möglich, da jedem Abschnitt der genannten Längs- bzw. Querträger lediglich ein Ende einer Segelfläche zugeordnet ist. Bei den genannten zwei Segelflächen sind also sämtliche vier Abschnitte der Träger mit jeweils einem Ende einer Segelfläche beaufschlagt.

Gemäß einer bevorzugten Weiterbildung der Erfindung sind das vordere Ende der einen Segelfläche an den Längsträgern und das hintere Ende dieser einen Segelfläche an den Querträgern und das vordere Ende der anderen Segelfläche an den Querträgern und das hintere Ende dieser anderen Segelfläche an den Längsträgern der Halterungen vorzugsweise unabhängig voneinander verstellbar befestigt und ist vorzugsweise jedes Ende der Segelflächen an der oberen und unteren Halterung separat voneinander einstellbar. Vorzugsweise ist die genannte eine Segelfläche die in Fahrtrichtung vordere Segelfläche und die genannte andere Segelfläche die in Fahrtrichtung hintere Segelfläche. Damit sind bei jeder Segelfläche das vordere Ende und das hintere Ende unabhängig voneinander verstellbar, so dass die erfindungsgemäße Segeleinrichtung ein optimales Einstellen der Segelflächen auf die herrschenden Windbedingungen ermöglicht. Zur optimalen Einstellung der Segelfläche, insbesondere des hinteren Endes der Segelfläche, über die Höhe ist die Segelfläche hinten jeweils oben und unten nicht nur gleich, sondern in begrenztem Maße auch unterschiedlich verstellbar bzw. verfahrbar. Damit lässt sich ein Twist der Segelfläche ohne eine Verdrehung der Mastkonstruktion erreichen.

Gemäß einer anderen Ausführungsform der Erfindung sind die Halterungen, vorzugsweise der Mast einschließlich seiner Halterungen, drehbar, wobei gemäß einer anderen Weiterbildung der Erfindung auch die Halterungen gegeneinander verdrehbar ausgebildet sein können. Damit lässt sich ein anderes Einstellen der erfindungsgemäßen Segeleinrichtung beispielsweise bei einer Wende leicht durch eine 90°-Drehung der Halterungen bzw. des Mastes einschließlich seiner Halterungen herbeiführen. Bei dieser Ausführungsform bleibt das jeweilige Ende der Segelfläche in seinem jeweiligen Abschnitt geführt und befestigt. Andererseits hat diese Weiterbildung auch den Vorteil, dass bei einem gegenseitigen Verdrehen der Halterungen erwünschte Öffnungseffekte, auch Twist genannt, realisierbar sind. Das gegenseitige Verdrehen der Halterungen kann bis etwa ± 10° betragen.

Vorteilhafterweise sind die Längs- und Querträger der Halterungen Profilschienen und weist vorzugsweise jeder Längs- und Querträger zwei etwa parallel zueinander verlaufende Profilschienen auf, die sich beide über die gesamte Länge des Längs- bzw. Querträgers, also sowohl über den bugseitigen als auch über den heckseitigen Abschnitt der Längsträger und sowohl über den backbordseitigen als auch über den steuerbordseitigen Abschnitt des Querträgers, erstrecken. Diese Weiterbildung hat den Vorteil, dass die Halterungen bzw. der Mast einschließlich seiner Halterungen bei Segelmanövern nicht, wie zuvor in Bezug auf eine andere Weiterbildung der Erfindung erwähnt, gedreht werden müssen. Vielmehr kann beispielsweise das hintere Ende der vorderen, einen Segelfläche und das vordere Ende der hinteren, anderen Segelfläche vom backbordseitigen Abschnitt auf den steuerbordseitigen Abschnitt des Querträgers und umgekehrt durchgeführt werden. Das hintere Ende der vorderen Segelfläche wird dabei vor dem vorderen Ende der hinteren Segelfläche gegebenenfalls um den Mast herum auf die andere Seite geleitet. Analoge Ausführungen gelten für das vordere Ende der vorderen Segelfläche und das hintere Ende der hinteren Segelfläche, welche in Längsrichtung aneinander vorbei auf die jeweils andere Seite, in diesem Fall vom bugseitigen auf den heckseitigen Abschnitt und umgekehrt, geleitet werden. Dies kann gemäß einer anderen Weiterbildung der Erfindung auch über lediglich eine Profilschiene des Längs- bzw. Querträgers erfolgen, an dem die genannten Enden jedoch unterschiedlich gehalten und so befestigt sind, dass jedes Ende von dem einen in den anderen Abschnitt und umgekehrt überführbar ist.

Gemäß einer anderen Weiterbildung der Erfindung sind die Segelflächen als Rechtecksegel oder Trapezsegel ausgebildet, welche vorzugsweise vertikal, d.h. parallel zum Mast, angeordnet sind. Dadurch lassen sich besonders große Segelflächen auf engem Raum realisieren. Dadurch lässt sich außerdem die Windenergie mit der erfindungsgemäßen Segeleinrichtung noch effizienter ausnutzen.

Gemäß einer anderen Weiterbildung der Erfindung ist das Setzen und Verstellen der Segelflächen Mikroprozessor gesteuert. Damit ist die erfindungsgemäße Segeleinrichtung leicht zu bedienen und letztlich einhandfähig. Diese Weiterbildung trägt mit zu einem wirtschaftlichen Betreiben eines solchen Schiffes bei, da letztlich weniger Personal zum Betreiben des Schiffes nötig ist. Außerdem lässt sich mit einer derartigen Steuerung die Windenergie noch effizienter ausnutzen, da bereits auf kleinere Änderungen an beispielsweise der Windrichtung bzw. dem anliegenden Kurs durch ein schnelles, angepasstes Einstellen der Segelflächen reagiert werden kann.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische, perspektivische Ansicht einer Segeleinrichtung insbesondere für hochseegängige Frachtschiffe, Yachten oder dergleichen;
- Fig. 2: eine schematische Draufsicht auf einen Teil der Segeleinrichtung bei Wind von backbord in der Segelstellung "am Wind";
- Fig. 3: eine schematische Draufsicht auf einen Teil der Segeleinrichtung bei Wind von backbord in der Segelstellung "halber Wind";
- Fig. 4: eine schematische Draufsicht auf einen Teil der Segeleinrichtung bei Wind von backbord in der Segelstellung "raumer Wind";
- Fig. 5: eine schematische Draufsicht auf einen Teil der Segeleinrichtung bei Wind von steuerbord in der Segelstellung "am Wind";
- Fig. 6: eine schematische Draufsicht auf einen Teil der Segeleinrichtung bei Wind von steuerbord in der Segelstellung "halber Wind"; und
- Fig. 7: eine schematische Draufsicht auf einen Teil der Segeleinrichtung bei Wind von steuerbord in der Segelstellung "raumer Wind".

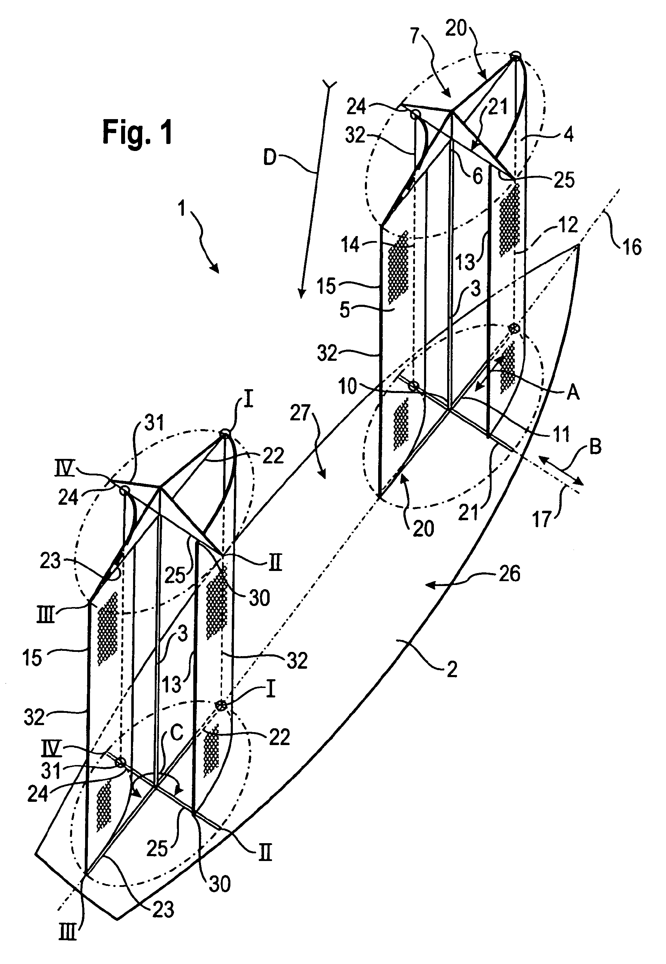

Eine Segeleinrichtung 1 insbesondere für hochseegängige Frachtschiffe 2, Yachten oder dergleichen ist schematisch in einer perspektivischen Ansicht in Fig. 1 gezeigt. Das Frachtschiff 2 ist lediglich schematisch angedeutet.

Die Segeleinrichtung 1 hat wenigstens einen Mast 3, welcher mit dem Schiff 2 verbunden ist. Ferner hat die Segeleinrichtung 1 zwei Segelflächen 4, 5, welche mit Hilfe des Mastes 3 gehalten sind. Die Segelfläche 4 ist als in Fahrtrichtung vordere Segelfläche ausgebildet, die Segelfläche 5 als in Fahrtrichtung hintere Segelfläche. Die Segelflächen 4, 5 sind in Fig. 1 in durchgezogenen Linien, soweit sichtbar, veranschaulicht.

In der in Fig. 1 gezeigten Ausführungsform der Erfindung sind zwei Masten mit je zwei Segelflächen, insgesamt also vier Segelflächen, vorhanden.

Der Mast 3 weist zum Halten und Setzen der Segelflächen 4, 5 an seinem oberen, vom Schiff 2 weg weisenden Ende 6 eine obere Halterung 7 auf. Ferner hat der Mast 3 an seinem unteren, mit dem Schiff 2 verbundenen Ende 10 eine untere Halterung 11. Enden 12, 13; 14, 15 der Segelflächen 4, 5 sind in den Halterungen 7, 11 in Längsrichtung 16 bzw. in Querrichtung 17 des Schiffes 2 verstellbar geführt. Dies ist in Fig. 1 durch Doppelpfeile A, B angedeutet.

Wie in Fig. 1 angedeutet, sind die Halterungen 7, 11 jeweils kreuzförmig ausgebildet. Jede Halterung 7, 11 weist zum Führen der betreffenden Enden 12 bis 15 der Segelflächen 4, 5 einen sich in Längsrichtung 16 des Schiffes 2 erstreckenden Träger 20, nachfolgend Längsträger genannt, sowie einen sich in Querrichtung 17 des Schiffes 2 erstreckenden Träger 21, nachfolgend Querträger genannt, auf. Gemäß Fig. 1 schließen Längs- und Querträger 20, 21 jeweils einen Winkel von 90° ein.

Jeder Längsträger 20, also der Längsträger 20 der oberen Halterung 7 sowie der Längsträger 20 der unteren Halterung 11, weist einen bugseitigen Abschnitt 22 und einen heckseitigen Abschnitt 23 auf. Ferner weist jeder Querträger 21, also der Querträger 21 der oberen Halterung 7 sowie der Querträger 21 der unteren Halterung 11, einen backbordseitigen Abschnitt 24 und einen steuerbordseitigen Abschnitt 25 zum Aufnehmen jeweils eines Endes 12, 13; 14, 15 einer der Segelflächen 4, 5 auf. Die Abschnitte der Träger können gleich lang sein.

Wie in Fig. 1 angedeutet, ist das vordere Ende 12 der einen Segelfläche 4, dies ist die vordere Segelfläche, an den Längsträgern 20 der Halterungen 7, 11 vorzugsweise unabhängig voneinander verstellbar befestigt. Ebenso ist das hintere Ende 13 dieser Segelfläche 4 an den Querträgern 21 der Halterungen 7, 11 vorzugsweise unabhängig voneinander verstellbar befestigt. Für die Segelfläche 5, das ist die in Fahrtrichtung hintere Segelfläche, gilt, dass das vordere Ende 14 an den Querträgern 21 der Halterungen 7, 11 und das hintere Ende 15 an den Längsträgern 20 der Halterungen 7, 11 wiederum vorzugsweise unabhängig voneinander verstellbar befestigt ist. Gemäß einer bevorzugten weiteren Ausführungsform der Erfindung ist jedes Ende 12, 13; 14, 15 der Segelflächen 4, 5 an der oberen und unteren Halterung 7, 11 separat voneinander einstellbar, so dass die jeweilige Segelfläche zu ihrer optimalen Einstellung über ihre Höhe oben und unten unterschiedlich verstellbar ist.

Gemäß einer bevorzugten Ausführungsform der Erfindung sind die Halterungen 7, 11, vorzugsweise der Mast 3 einschließlich seiner Halterungen 7, 11, drehbar, wie dies in Fig. 1 durch den Doppelpfeil C angedeutet ist. Es ist auch möglich, dass die Halterungen bzw. der Mast einschließlich der Halterungen lediglich um 90° drehbar ausgebildet sind. Dies würde in Bezug auf die Anordnung der Fig. 1 bedeuten, dass beispielsweise die Endpunkte I, II, III, IV der Halterungen 7, 11 um 90° im Uhrzeigersinn gedreht werden können und aus der letztgenannten Stellung um 90° im Gegenuhrzeigersinn wieder in die in Fig. 1 gezeigte Ausgangsstellung zurückgedreht werden können. Bei einer 90°-Drehung im Uhrzeigersinn würde beispielsweise der Punkt IV in Fig. 1 anschließend sich an der Stelle des Punktes I der Fig. 1 befinden. Entsprechendes gilt für die anderen Endpunkte.

Gemäß einer weiteren Ausführungsform der Erfindung sind die Halterungen 7, 11 auch gegeneinander verdrehbar.

Bei einer anderen bevorzugten Ausführungsform der Erfindung sind die Längs- und Querträger 20, 21 der Halterungen 7, 11 Profilschienen. Jeder Längs- und Querträger 20, 21 hat zwei etwa parallel zueinander verlaufende Profilschienen (nicht gezeigt), die sich beide über die gesamte Länge des Längs- bzw. Querträgers also jeweils über beide Abschnitte 22, 23; 24, 25 erstrecken. Bei dieser letztgenannten Ausführungsform ist zum Manövrieren des Schiffes ein Drehen der Halterungen bzw. des Mastes einschließlich seiner Halterungen nicht erforderlich. Das Schiff kann sämtliche Segelmanöver, wie beispielsweise Wenden und Halsen, bewerkstelligen.

Die Segelflächen 4, 5 sind als Rechtecksegel oder Trapezsegel ausgebildet, welche vorzugsweise vertikal, d.h. parallel zum Mast 3, angeordnet sind. Dies ist in Bezug auf die als Rechtecksegel ausgebildeten Segelflächen in Fig. 1 veranschaulicht.

Gemäß einer besonders bevorzugten Ausführungsform der Erfindung ist das Setzen, Verstellen und Einholen der Segelflächen 4, 5 Mikroprozessor gesteuert (nicht näher gezeigt).

Fig. 1 zeigt, dass die Segelfläche 4 der Lee-Seite 26 und die andere Segelfläche 5 der Luv-Seite 27 des Schiffes 2 zugeordnet ist. Ferner ist erkennbar, dass das vordere Ende 12 der Segelfläche 4 an den Endpunkten I in Richtung des Doppelpfeils A, hingegen das hintere Ende 13 der Segelfläche 4 an den Endpunkten 30 in Richtung des Doppelpfeils B verschiebbar ist. Umgekehrt gilt für die Segelfläche 5, dass deren vorderes Ende 14 an den Endpunkten 31 in Richtung des Doppelpfeils B, die Endpunkte III des hinteren Endes 15 hingegen in Richtung des Doppelpfeils A verstellbar geführt sind.

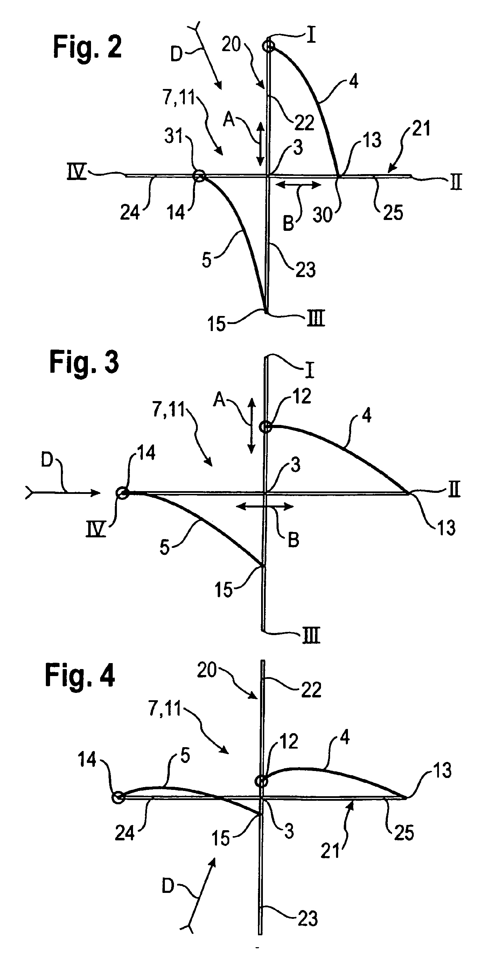

Ausgewählte Stellungen der Segelflächen 4, 5 sind beispielhaft in den Fig. 2 bis 7 in jeweils rein schematischen Draufsichten gezeigt. Die Windrichtung ist in sämtlichen Figuren durch Pfeile D gekennzeichnet.

Fig. 2 verdeutlicht die Segelstellung "am Wind" bei Wind von backbord, Fig. 3 die Segelstellung "halber Wind" bei Wind von backbord und Fig. 4 die Segelstellung "raumer Wind" bei backbordseitigem Wind.

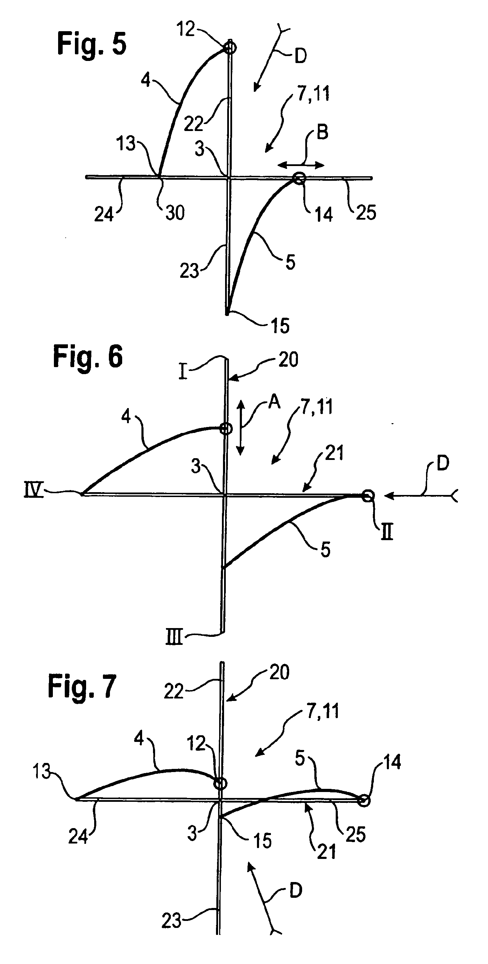

Fig. 5 zeigt die Segelstellung "am Wind" bei steuerbordseitigem Wind; Fig. 6 die entsprechende Segelstellung "halber Wind" und Fig. 7 die entsprechende Segelstellung "raumer Wind".

In den Segelstellungen gemäß den Fig. 2 bis 4 herrscht, wie zuvor erwähnt, backbordseitiger Wind. Um die Segelstellung aus derjenigen der Fig. 2 in diejenige der Fig. 3 zu verändern, wird das vordere Ende 12 der Segelfläche 4 nach innen, zum Mast 3 hin, und das hintere Ende 13 der Segelfläche 4 nach außen hin an den Endpunkt II verfahren, so dass sich letztlich die in Fig. 3 gezeigte Stellung "halber Wind von backbord" ergibt. Entsprechend gilt für die Segelfläche 5 ein Verfahren des Endpunktes 31 des vorderen Endes 14 nach außen in Richtung des Endpunktes IV und ein Verfahren des hinteren Endes 15 in Richtung auf den Mast 3 hin.

Nach einer sich daran anschließenden Wende oder Halse ergeben sich die in den Fig. 5 bis 7 gezeigten Stellungen "am Wind", "halber Wind" und "raumer Wind", wobei der Wind dann jeweils von steuerbord weht. Wie zuvor erwähnt, kann die erfindungsgemäße Segeleinrichtung dazu um 90° gedreht werden, wie dies bei dem Doppelpfeil C in Fig. 1 links verdeutlicht ist. In diesem Fall wird bei einer Wende aus dem backbordseitigen Abschnitt 24 des Querträgers 21 in Fig. 2 in der Stellung gemäß Fig. 5 der bugseitige Abschnitt 22 des Längsträgers 20. Entsprechend wird aus dem bugseitigen Abschnitt 22 des Längsträgers in Fig. 2 in der Stellung gemäß Fig. 5 der steuerbordseitige Abschnitt 25 des Querträgers 21. Entsprechendes gilt für den steuerbordseitigen Abschnitt 25 des Querträgers gemäß Fig. 2, welcher in der Stellung gemäß Fig. 5 dann heckseitiger Abschnitt 23 des Längsträgers wird, und für den heckseitigen Abschnitt 23 des Längsträgers gemäß Fig. 2, welcher in der Stellung gemäß Fig. 5 backbordseitiger Abschnitt 24 des Querträgers 21 wird.

Gemäß einer bevorzugten Weiterbildung der Erfindung ist ein Überführen der Segelflächen beispielsweise aus der in Fig. 2 gezeigten Stellung in diejenige der Fig. 5 auch dadurch möglich, dass das hintere Ende 13 der Segelfläche 4 aus dem steuerbordseitigen Abschnitt 25 (siehe Stellung gemäß Fig. 2) in den backbordseitigen Abschnitt 24 des Querträgers 21 (siehe Stellung gemäß Fig. 5 )überführt wird. Gleichzeitig wird das vordere Ende 14 der hinteren Segelfläche 5 aus der Stellung gemäß Fig. 2 dann nach rechts hin, d.h. aus dem backbordseitigen Abschnitt 24 in den steuerbordseitigen Abschnitt 25 des Querträgers 21, überführt. In dem letztgenannten Fall brauchen also die Halterungen vorzugsweise der Mast einschließlich seiner Halterungen nicht drehbar ausgebildet sein. Analoge Ausführungen gelten auch für ein Überführen der Segelflächen mittels einer Halse beispielsweise aus der in Fig. 4 gezeigten Stellung in diejenige der Fig. 7. In diesem Fall wird die hintere Segelfläche 5 gemäß Fig. 4 dann zur vorderen Segelfläche 4 gemäß Fig. 7 und die vordere Segelfläche 4 gemäß Fig. 4 zur hinteren Segelfläche 5 gemäß Fig. 7.

Erfindungsgemäß ist daher bei der vorderen Segelfläche 4 das vordere Ende 12 in Längsrichtung 16 des Schiffes 2 und das hintere Ende 13 dieser Segelfläche in Querrichtung 17 des Schiffes 2 in beiden Halterungen 7, 11 verschiebbar. Bei der zweiten, hinteren Segelfläche 5 gilt, dass das vordere Ende 14 in Querrichtung 17 des Schiffes 2 und das hintere Ende 15 in Längsrichtung 16 des Schiffes 2 jeweils in den Halterungen 7, 11 bewegbar, insbesondere verschiebbar ist. Dabei können die vorderen Enden 12, 14 der Segelflächen 4, 5 als Roll-Vorstag und die hinteren Enden 13, 15 der Segelflächen 4, 5 mit einem Achterliek-Seil ausgebildet sein. Es ist klar, dass die genannten Enden 12 bis 15 einzeln, d.h. unabhängig voneinander, verfahren werden können, so dass unterschiedlich starke Segelprofilwölbungen eingestellt werden können. Ein Reffen der Segelflächen 4, 5 kann, wie zuvor erwähnt, durch den jeweiligen Roll-Vorstag möglich sein; es ist aber auch denkbar, ein Reffen der Segelflächen nach unten, d.h. zum Schiff hin, vorzusehen.

Üblicherweise sind die vier Endpunkte I bis IV jeder Halterung 7, 11 mit Stagen 32 senkrecht miteinander verbunden. Der besseren Übersicht halber sind in Fig. 1 lediglich einige der genannten Stagen 32 eingezeichnet. Es ist klar, dass durch die Anbringung der Stagen die Biegung des Mastes reduziert ist. Die Halterungen 7, 11 können auch als Drehplatte ausgebildet und mit dem Rumpf des Schiffes 2 verbunden sein. Durch ein Verfahren der jeweiligen hinteren Enden 13, 15 der Segelflächen 4, 5, also durch ein Verfahren der jeweiligen Achterlieks, synchron oder auch unterschiedlich hinsichtlich der oberen Halterung 7 bzw. der unteren Halterung 11, sind unterschiedliche Profile und Profiltiefen bei der Segeleinrichtung einstellbar. Unterschiedliche Profiltiefen und ein sogenannter Twist sind auch miteinander kombinierbar.

Wie zuvor erwähnt, hat die erfindungsgemäße Segeleinrichtung wenigstens einen Mast. Es ist klar, dass, wie in Fig. 1 angedeutet, auch mehrere solcher Rigg-Masten hintereinander angeordnet sein können. Üblicherweise befinden sich an jedem Mast zwei gleiche, vielfältig trimmbare Segelflächen.

Wie zuvor erwähnt, befindet sich eine Halterung, auch Rahmen genannt, an der Mastspitze und eine weitere Halterung oberhalb des Decks des Schiffes. Als Material für den Mast und die Halterungen kommen vorzugsweise leichte, gleichzeitig aber auch hochfeste Werkstoffe aus den Bereichen Luft- und Raumfahrt, vorzugsweise unter besonderer Berücksichtigung neuester Erkenntnisse der Bionik, zur Anwendung. Die Segelflächen können konkav, nach außen gewölbt und halbstarr fixiert oder flexibel, mit oder ohne Segellatten, beidseitig durch Stahlseile an der oberen und unteren Halterung seitlich fixiert gehalten sein. Die genannten Segelflächen sind, wie zuvor erläutert, gegeneinander verschiebbar, beispielsweise durch Veränderung der Mast/Halterung Geometrie von einer quadratischen Form in Richtung einer Rautenform ähnlich derjenigen eines Parallelogramms veränderbar. Die erfindungsgemäße Segeleinrichtung kann als Hauptantrieb oder als Zusatzantrieb des Schiffes zum Einsatz kommen.

Damit ist eine Segeleinrichtung geschaffen, welche ein besonders effizientes Ausnutzen der Windenergie, insbesondere ein Segeln hoch am Wind, ermöglicht.

## Patentansprüche

1. Segeleinrichtung insbesondere für hochseegängige Frachtschiffe, Yachten oder dergleichen,
mit wenigstens einem mit dem Schiff (2) verbundenen Mast (3) und zwei mit Hilfe des Mastes (3) gehaltenen Segelflächen (4, 5),
wobei der wenigstens eine Mast (3) zum Halten und Setzen der Segelflächen (4, 5) an seinem oberen, vom Schiff (2) weg weisenden Ende (6) eine obere Halterung (7) und an seinem unteren, mit dem Schiff (2) verbundenen Ende (10) eine untere Halterung (11) aufweist,
**dadurch gekennzeichnet, dass**
Enden (12, 13; 14, 15) der Segelflächen (4, 5) in Längs- bzw. Querrichtung (16, 17) des Schiffes (2) in den Halterungen (7, 11) verschiebbar geführt sind.

2. Segeleinrichtung nach Anspruch 1, **dadurch gekennzeichnet, dass** die Halterungen (7, 11) jeweils kreuzförmig ausgebildet sind und zum Führen der Enden (12, 13; 14, 15) der Segelflächen (4, 5) einen sich in Längsrichtung (16) des Schiffes (2) erstreckenden Träger (20) sowie einen sich in Querrichtung (17) des Schiffes (2) erstreckenden Träger (21) aufweisen.

3. Segeleinrichtung nach Anspruch 2, **dadurch gekennzeichnet, dass** jeder Längsträger (20) einen bugseitigen und einen heckseitigen Abschnitt (22, 23) und jeder Querträger (21) einen backbordseitigen und einen steuerbordseitigen Abschnitt (24, 25) zum Aufnehmen jeweils eines Endes (12, 13; 14, 15) einer der Segelflächen (4, 5) aufweist.

4. Segeleinrichtung nach Anspruch 2 oder 3, **dadurch gekennzeichnet, dass** das vordere Ende (12) der einen Segelfläche (4) an den Längsträgern (20) und das hintere Ende (13) dieser einen Segelfläche (4) an den Querträgern (21) und das vordere Ende (14) der anderen Segelfläche (5) an den Querträgern (21) und das hintere Ende (15) dieser anderen Segelfläche (5) an den Längsträgern (20) der Halterungen (7, 11) vorzugsweise unabhängig voneinander verstellbar befestigt sind und vorzugsweise jedes Ende (12, 13; 14, 15) der Segelflächen (4, 5) an der oberen und unteren Halterung (7, 11) separat voneinander einstellbar ist.

5. Segeleinrichtung nach einem der vorhergehenden Ansprüche, **dadurch gekennzeichnet, dass** die Halterungen (7, 11), vorzugsweise der Mast (3) einschließlich seiner Halterungen (7, 11), drehbar sind.

6. Segeleinrichtung nach einem der vorhergehenden Ansprüche, **dadurch gekennzeichnet, dass** die Halterungen (7, 11) gegeneinander verdrehbar sind.

7. Segeleinrichtung nach einem der Ansprüche 2 bis 6, **dadurch gekennzeichnet, dass** die Längs- und Querträger (20, 21) der Halterungen (7, 11) Profilschienen sind und jeder Längs- und Querträger (20, 21) vorzugsweise zwei etwa parallel zueinander verlaufende Profilschienen aufweist, die sich beide über die gesamte Länge des Längs- bzw. Querträgers (20, 21) erstrecken.

8. Segeleinrichtung nach einem der vorhergehenden Ansprüche, **dadurch gekennzeichnet, dass** die Segelflächen (4, 5) als Rechtecksegel oder Trapezsegel ausgebildet sind, welche vorzugsweise vertikal, d.h. parallel zum Mast (3), angeordnet sind.

9. Segeleinrichtung nach einem der vorhergehenden Ansprüche, **dadurch gekennzeichnet, dass** das Setzen und Verstellen der Segelflächen (4, 5) Mikroprozessor gesteuert ist.

## Claims

1. Sail system in particular for ocean-going cargo ships, yachts or the like, having at least one mast (3) which is connected to the vessel (2) and two expanses of sail (4, 5) which are held by means of the mast (3), wherein the at least one mast (3) has, to enable the expanses of sail (4, 5) to be held and set, an upper mounting (7) at its upper end (6) pointing away from the vessel (2) and a lower mounting (11) at its lower end (10) connected to the vessel (2), **characterized in that** ends (12, 13; 14, 15) of the expanses of sail (4,5) are displaceably guided in the longitudinal and transverse directions (16, 17) of the vessel (2) in the mountings (7, 11).

2. Sail system according to claim 1, **characterised in that** the mountings (7, 11) are each cruciform in shape and have, to guide the ends (12, 13; 14, 15) of the expanses of sail (4, 5), a support (20) which extends in the longitudinal direction (16) of the vessel (2) and a support (21) which extends in the transverse direction (17) of the vessel (2).

3. Sail system according to claim 2, **characterised in that** each longitudinal support (20) has a bow and a stern portion (22, 23) and each transverse support (21) has a port and a starboard portion (24, 25), to receive respective ends (12, 13; 14, 15) of one of the expanses of sail (4, 5).

4. Sail system according to claim 2 or 3, **characterised in that** the forward end (12) of one expanse of sail (4) is fastened to the longitudinal supports (20) of the mountings (7, 11) and the aft end (13) of this one expanse of sail (4) is fastened to the transverse supports (21) thereof, and the forward end (14) of the other expanse of sail (5) is fastened to the transverse supports (21) of the mountings (7, 11) and the aft end (15) of this other expanse of sail (5) is fastening to the longitudinal supports (20) thereof, preferably to be adjustable independently of one another, and each end (12, 13; 14, 15) of the expanses of sail (4, 5) is preferably able to be positioned separately from the others on the upper and lower mountings 7, 11).

5. Sail system according to one of the preceding claims, **characterised in that** the mountings (7, 11), and preferably the mast (3) plus the mountings (7, 11) it has, are rotatable.

6. Sail system according to one of the preceding claims, **characterised in that** the mountings (7, 11) are able to be turned relative to one another.

7. Sail system according to one of claims 2 to 6, **characterised in that** the longitudinal and transverse supports (20, 21) of the mountings (7, 11) are rails in profile form and each longitudinal and transverse support (20, 21) preferably has two rails in profile form extending approximately parallel to one another, both of which extend for the entire length of the longitudinal and transverse supports (20, 21).

8. Sail system according to one of the preceding claims, **characterised in that** the expanses of sail (4, 5) take the form of rectangular or trapezoidal sails which are preferably arranged vertically, i.e. parallel to the mast (3).

9. Sail system according to one of the preceding claims, **characterised in that** the setting and adjustment of the expanses of sail (4, 5) is microprocessor controlled.

## Revendications

1. Système de voilure, en particulier pour des navires marchands, des yachts ou similaires naviguant en haute mer,
comprenant au moins un mât (3) relié au navire (2) et deux surfaces de voilure (4, 5) maintenues à l'aide du mât (3),
dans lequel ledit au moins un mât (3) comporte, pour maintenir et installer les surfaces de voilure (4, 5), à son extrémité supérieure (6) disposée en éloignement du navire (2) une monture supérieure (7) et à son extrémité inférieure (10) reliée au navire (2) une monture inférieure (11),
**caractérisé en ce que**
les extrémités (12, 13 ; 14, 15) des surfaces de voilure (4, 5) sont guidées en déplacement dans les montures (7, 11) en direction longitudinale et en direction transversale (16, 17) du navire (2).

2. Système de voilure selon la revendication 1, **caractérisé en ce que** les montures (7, 11) sont réalisées chacune en forme de croix et comprennent, pour guider les extrémités (12, 13 ; 14, 15) des surfaces de voilure (4, 5), un support (20) s'étendant en direction longitudinale (16) du navire (2) ainsi qu'un support (21) s'étendant en direction transversale (17) du navire (2).

3. Système de voilure selon la revendication 2, **caractérisé en ce que** chaque support longitudinal (20) comprend un tronçon côté proue et un tronçon côté poupe (22, 23), et chaque support transversal (21) comprend un tronçon côté bâbord et un tronçon côté tribord (24, 25) pour recevoir chacun une extrémité (12, 13 ; 14, 15) de l'une des surfaces de voilure (4, 5).

4. Système de voilure selon la revendication 2 ou 3, **caractérisé en ce que** l'extrémité antérieure (12) de l'une des surfaces de voilure (4) est fixée sur les supports longitudinaux (20) et l'extrémité postérieure (13) de cette surface de voilure (4) est fixée sur les supports transversaux (21) et l'extrémité antérieure (14) de l'autre surface de voilure (5) est fixée sur les supports transversaux (21) et l'extrémité postérieure (15) de cette autre surface de voilure (5) est fixée de manière déplaçable sur les supports longitudinaux (20) des montures (7, 11), de préférence avec possibilité de déplacement indépendamment l'une de l'autre et chaque extrémité (12, 13 ; 14, 15) des surfaces de voilure (4, 5) est réglable au niveau de la monture supérieure et de la monture inférieure (7, 11), séparément l'une de l'autre.

5. Système de voilure selon l'une des revendications précédentes, **caractérisé en ce que** les montures (7, 11) sont capables de rotation, et de préférence le mât (3) y compris ses montures (7, 11) sont capables de rotation.

6. Système de voilure selon l'une des revendications précédentes, **caractérisé en ce que** les montures (7, 11) sont capables de pivoter l'une par rapport à l'autre.

7. Système de voilure selon l'une des revendications 2 à 6, **caractérisé en ce que** les supports longitudinaux et les supports transversaux (20, 21) des montures (7, 11) sont des rails profilés et chaque support longitudinal et chaque support transversal (20, 21) comprend de préférence deux rails profilés s'étendant approximativement parallèlement l'un à l'autre, qui s'étendent tous les deux sur la totalité de la longueur du support longitudinal ou du support transversal (20, 21).

8. Système de voilure selon l'une des revendications précédentes, **caractérisé en ce que** les surfaces de voilure (4, 5) sont réalisées sous forme de voiles rectangulaires ou de voiles trapézoïdales, qui sont de préférence agencées verticalement, c'est-à-dire parallèlement au mât (3).

9. Système de voilure selon l'une des revendications précédentes, **caractérisé en ce que** la mise en place et le réglage des surfaces de voilure (4, 5) sont commandés par un microprocesseur.
